# EUROPEAN PATENT APPLICATION

(11) **EP 4 557 165 A1**
(43) Date of publication of application: **21.05.2025**
(21) Application number: 24206348.5
(22) Date of filing: 14.10.2024
(51) Int. Cl.: G06N 3/045, G06N 5/045, G06N 20/00

(54) **GENERATING AN EMBEDDING SPACE FROM A TRAINING DATA SET FOR A MACHINE LEARNING ALGORITHM**

(30) Priority: 17.11.2023 US 202363600248 P
(71) Applicant: General Electric Company, Evendale, Ohio 45215 (US)
(72) Inventor: ARDIS, Paul, Niskayuna, 12309 (US)
(74) Representative: Openshaw & Co.

(57) **Abstract**

A system for and a method of generating an embedding space from a training data set for a machine learning algorithm. The method includes receiving, through an input of a computer system, an input operating data point by one or more layers of a machine learning algorithm implemented on the computer system, generating an embedding space using a training data set, the embedding space including a plurality of inducing data points, each inducing data point corresponding to a cluster of training data points, comparing the input operating data point against the plurality of inducing data points, determining whether a sufficient set of supporting historical data points exists in the plurality of training data points within a fixed distance from the input operating data point, and generating an alert based on the determining to enable a user or an electronic controller to take appropriate action, and outputting the alert.

## Description

### TECHNICAL FIELD

The present disclosure generally relates to machine learning algorithms and, in particular, to a method and a system of generating an embedding space from a training data set for a machine learning algorithm.

### BACKGROUND

Machine learning (ML) algorithms are part of the overall artificial intelligence landscape and can be used to automatically learn (e.g., progressively improve performance on a specific task) from data without being explicitly programmed. For example, machine learning algorithms may be used to control physical assets, where machine learning models may be trained with relevant historical data (e.g., training data set). However, current ML algorithms may lack any control in the sense that the training data set, even if relatively large, does not take into account the specificity of the data. Machine learning models include neural networks (where embedding can be determined for each layer of the network), decision trees/forests (where embedding can be determined for each depth of the tree), and monolithic models (where embedding can be determined for just the input space).

### BRIEF DESCRIPTION OF THE DRAWINGS

The foregoing and other features and advantages will be apparent from the following, more particular, description of various exemplary embodiments, as illustrated in the accompanying drawings, wherein like reference numbers generally indicate identical, functionally similar, and/or structurally similar elements.
FIG. 1 shows a flow diagram of a system 100 of generating an embedding space from a training data set for a machine learning algorithm, according to an embodiment of the present disclosure.
FIG. 2 shows a plot of inducing data points from a training data set, according to an embodiment of the present disclosure.
FIG. 3 is a plot of a fraction of trust (i.e., "I know" or IK) data points versus the number of inducing data points, according to an embodiment of the present disclosure.
FIG. 4 is diagram of a computer system for implementing the system and the method of generating an embedding space from a training data set for a machine learning algorithm, according to an embodiment of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the spirit and the scope of the present disclosure.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

Machine learning models can have their performance controlled using epistemic reasoning. In epistemic reasoning, an explicit support set is identified for each new inference, and thus relating current decisions to concurring historic decisions. Justified belief is adjudged to exist when a sufficient number of concurring historic decisions are present in the support set, as defined by historic decisions within a fixed distance of the new inference. Models under control with epistemic reasoning produce a non-null output when justified belief is adjudged, and return a null output when it is not.

Embodiments of the present disclosure, further distill, select or filter a training data set to provide an embedding space. In the embedding space, portions of the space are represented with weighted (representative) inducing data points of the training data set and corresponding metadata regarding local historic point distribution. In this way, each new inference or new operating data is compared against only the inducing data points to determine whether justified belief is adjudged to occur in concordance with the training data set and to estimate uncertainty. A cardinality of the inducing data points in the embedding space is generally at least an order of magnitude less than a cardinality of the full training data set. A cardinality is the number of elements in a given data set. For example, the inducing data points can represent a subset of training data point with some Gaussian representation. The inducing data points essentially represent local density regions within the training data set.

Machine learning models that can be safety-controlled in this way using the embedding space include neural networks (where embedding can be determined for each layer of the network), decision trees/forests (where embedding can be determined for each depth of the tree), and monolithic models (where embedding can be determined for just the input space).

In embodiments of the present disclosure, the embedding space can be generated using a sparse Gaussian process, using Gaussian mixture models, or using a random decimation of the training set. However, additional approaches can also be used. In a sparse Gaussian process, a tunable control is the number of inducing data points. In Gaussian mixture models, a tunable control is the number of mixture components. Each component produces an inducing data point that is its centroid. In random decimation of the training data set, each inducing data point is a selected data point exemplar. Each of these methods shows significant improvement in size, weight, and power (SWAP), measured by the required number of historic data points stored to retrievable memory, the number of comparisons between the inference point and a historic data point, and the total time required to complete all such comparisons, while maintaining epistemic performance against the current state-of-the-art baseline. In contrast, as in conventional black-box neural networks, machine learning algorithms typically lack explicit performance control.

The determination to use an embedding-based approach is novel, as is the specific selection of sparse Gaussian process-determined data points for embedding to ensure maximal SWaP gain while retaining the ability to do Bayesian uncertainty quantification, for example. The example of a Gaussian process and Gaussian distributions is discussed herein throughout as used in the embedding space. However, the present disclosure is not limited to a Gaussian construction only and can encompass various methods using other functions such as a Lorentzian, or other distribution functions, or to determine a mixture model of Gaussian or non-Gaussian distribution functions via alternate approximation methodology. The present method and system can also use a random selection of points. Any representation or model that captures the density distribution of the training data can be used to generate the embedding space. Therefore, given a training data set, one or more density centroids within the training data set can be selected and represented by any function, Gaussian, Lorentzian, or other distribution. The density centroids can then be used as representative points of the training data set and use the centroid points corresponding to the inducing data points instead of the training data points. Rather than comparing a new operating data point (input data point) against every example data point in the training data set, the new operating data point is only compared against the inducing data points (e.g., centroid points) that are stored. Those inducing data points are representative of the training data set, and they have stored with them local density information that can be used to determine sufficiency of a corresponding support set and corresponding adjudgement of justified belief.

By learning an embedding space in the form of a set of weighted inducing data points (e.g., Gaussian centroid selected points), the inventor was able to represent the training data set relevant epistemic features (for the determination of sufficiency of support). If representative associated historic data points are desired, those can also be stored while still significantly SWAP-reduced, including a representation of the inducing points, a number of additional historic data points from the training set which correspond to that inducing point, and local distribution statistics of the training set around the inducing point. In other words, the inducing data points may provide a sufficient set of statistics to characterize the training data set as a whole and (if desired) to generate representative local examples around inducing points. Therefore, new input points are compared only to the inducing data points in order to determine if they are sufficiently close to a sufficient number of historical examples comprising a support set where justified belief is adjudged.

A covariance of the inducing data points can also be estimated to efficiently estimate the uncertainty of each inducing data point when considering the application of the inducing data points in support-based reasoning.

A comparison of each new operating data point against a training data set allows for a determination of whether the model would need to extrapolate to respond to the operating data point, whether the training data set corresponds to a region of low sample density, and/or whether the training data set corresponds to a region of output uncertainty. Conventional methods performed an exhaustive comparison of each new operating data point to all training data points, or at least to all points comprising a convex hull of the training set. In contrast, the present disclosure embeds selected training data points into a density-based summarization by way of weighted inducing data points (e.g., Gaussian-based weighting). In this way, fewer comparisons may be needed as the comparison is made against the number of inducing data points, instead of against the total number of training data points.

An evaluation is performed against open-source benchmarks including COCO (Common Objects in COntext) and CIFAR-10 data set. The CIFAR-10 data set consists of sixty thousand 32x32 color images in ten classes and is commonly used to train machine learning and computer vision algorithms. The present method showed accuracy consistently at least as good as a naive (non-epistemic) implementation, with coverage approaching that of previous state-of-the-art epistemic systems while using only 5% of the storage and compute capacity.

The present method and system provide a reduction in SWAP required for visual tasks of approximately 90% while retaining high performance. The present method and system enable immediate use of industry-dominant black box pre-trained models in edge deployment (previously infeasible due to storage and compute requirements).

For example, the present method provides for low-SWAP trusted deployment of neural networks and other effective models that are pre-trained and/or packaged for use without providing the full training set, hyperparameters, or other details of their creation. Even in cases when that information is available, its storage on the edge device may not be required, allowing for a significantly reduced computational footprint for trusted execution. As a result, high-performing models can be deployed with assurances of safe performance even in very limited computational environments. This can allow for expedient trusted autonomy applications in multi-party settings for commercial and military offerings.

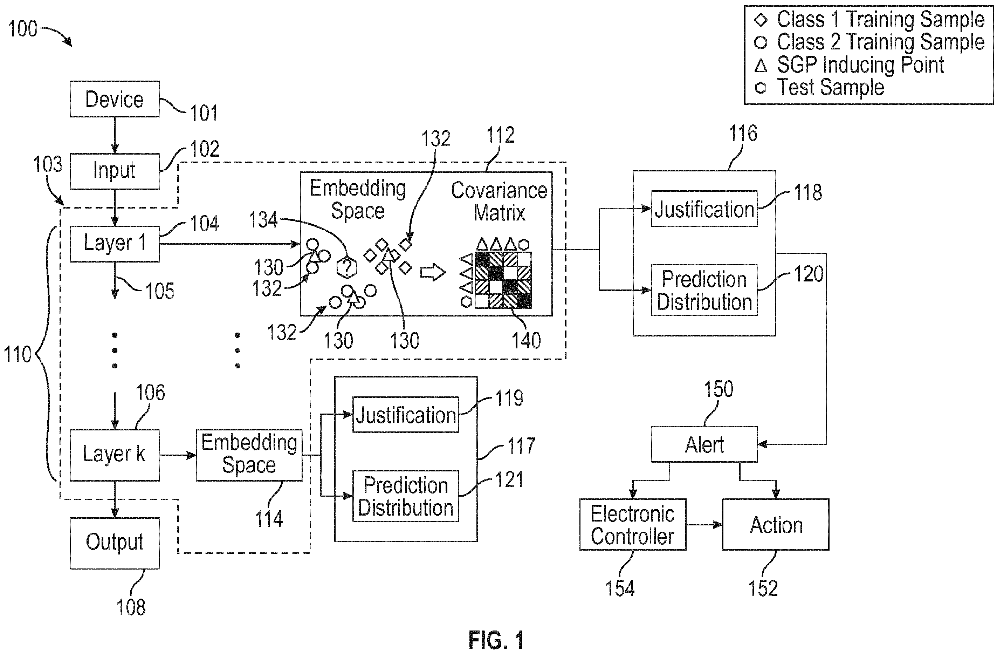

Referring now to the drawings, FIG. 1 shows a flow diagram of a system 100 for generating an embedding space from a training data set for a machine learning algorithm, according to an embodiment of the present disclosure. The system 100 includes an input 102. The input 102 receives new operating data. The new operating data can be generated by a device 101. The device 101 can be, for example, a sensor device (e.g., an image sensor, an electro-optical sensor, an infrared sensor, an ultraviolet sensor), a radar detection system (e.g., synthetic aperture radar (SAR)), or the like. Therefore, the new operating data received by the input 102 can be remote sensing data such as image data, infrared data, electro-optical data, radar data, etc. The sensor device can be provided on an aircraft (manned or unmanned). In an unmanned aircraft, the sensor may be part of the unmanned aircraft systems (UAS). The sensor device can be used for object detection such as target detection, for example. The machine learning algorithm includes one or more layers 110. Each layer of the one or more layers 110 provides a transformation from an input space to an output space, where the cardinality of the input space is equal to the cardinality of an output space of a preceding layer (if a preceding layer exists). The input 102 is connected to a first layer 104 (layer 1) of the one or more layers 110 of the machine learning algorithm that is implemented on the computer system 103.

The input 102 receives the new operating data from the device 101 and provides or passes the new operating data to the first layer 104 (layer 1) of the machine learning algorithm (e.g., a neural network) implemented on the computer system 103. The first layer 104 of the machine learning algorithm would produce an output 105. The output 105 is passed to the next layer of the one or more layers 110 of the machine learning algorithm, etc. For example, the output 105 is passed to a second layer of the one or more layers 110 which in turn would produce another output that is passed to the next layer. This process can be repeated until reaching the last layer 106 (layer k) of the one or more layers 110. The last layer 106 would produce an output 108. The output 108 corresponds to the output of the machine learning algorithm (e.g., neural network) implemented on the computer system 103. Therefore, the input 102 receives the new operating data from the device 101 and provides or passes the new operating data, successively, to the one or more layers 110. The one or more layers 110 are linked in series and output a result through the output 108. The input space of the first layer 104 is the space corresponding to original data from the device 101 (e.g., imagery data or radar data from a sensor). The output space of the last layer 106 is the space of outputs of the machine learning algorithm (e.g., a neural network) and corresponds to output 108. In a neural network, each of the one or more layers 110 corresponds to parallel neurons (random variables). Each layer of the one or more layers 110 performs a functional transformation using a training data set accessed by the computer system 103. The training data set is used to train the machine learning algorithm executing or running on the computer system 103.

In the system 100, in addition to processing the input 102 through the first layer 104 (layer 1), the input 102 is also passed to an embedding comparison in a generated embedding space 112 by the first layer 104 (layer 1). The first layer 104 (layer 1) includes the generated embedding space 112. The embedding space 112 is generated using the training data set. The embedding space 112 is used as a test whether the representative samples from the training data set has a sufficient set of supporting exemplars from an embedding vector corresponding to input 102 corresponding to the new operating data.

Each layer of the one or more layers 110 can independently perform the same process as the first layer 104. For example, last layer 106 (layer k), can also include a defined embedding space 114. The embedding space 114 is generated using the training data set. The embedding space 114 corresponds to the output space of the last layer 106 (layer k).

Therefore, at each layer of the one or more layers 110, inputs are processed as designed for the model structure of the machine learning algorithm. In addition, in parallel, a test is performed to test the input for each layer (e.g., first layer 104) of the one or more layers 110 by determining the embedded vector corresponding to the input (e.g., input 102), comparing the vector of the input (e.g., input 102) corresponding to the new operating data against representative samples for the training set that correspond to the inducing data points to determine if there exists a sufficient (justifying) set of supporting historical data points within a fixed distance from the vector. If this test is passed, operation continues to the next layer. If the test is not passed, operation cancels, returning a null value as output 108 (indicating attempted model performance beyond its bounds of competence).

In an embodiment, when performing the comparison of the new operating data point with the embedding space 112 and/or the embedding space 114, one layer is typically used (for example, the first layer 104). However, the comparison can be performed for all layers, if more than one layer is used. If the test does not pass for any of the layers, a null value is returned as output 108.

Even though, as shown in FIG. 1, the generating of the embedding space and the comparison between the new operating data and the embedding space is performed, for example using the first layer 104 (layer 1) of the machine learning algorithm (e.g., a neural network), or the last layer 106 (layer k) of the machine learning algorithm (e.g., the neural network) to capture factors related to the comparison, each layer of the one or more layers 110 can be processed independently to provide the performance of specific data points.

Therefore, each layer of the one or more layer 110 has a primary output (for example, output 105 of the first layer 104) and a secondary product or secondary output 116 of the comparison between the operating data and the embedding space 112. The secondary output 116 of the comparison determines whether there is a sufficient set of support or justification 118 for the embedding space 112, for example. The term "justification" is used herein to mean that there exists a sufficient (justifying) set of supporting exemplars within a fixed distance from the vector of the input 102 corresponding to the new operating data point. The secondary output 116 may also include a prediction distribution 120. The prediction distribution 120 is a result of quantifying the specific selection of sparse Gaussian data points for the embedding space in the first layer 104 to ensure maximal SWAP gain using, for example, a Bayesian uncertainty quantification, and corresponding posterior likelihood of the operating data.

The comparison can be implemented at each layer of the one or more layers 110 and the justification 118 is implemented for each layer of the one or more layers 110. Similar to the secondary output 116 of the comparison for the embedding space 112, a secondary output 117 can also be generated for the comparison of the embedding space 114. Similarly, a justification 119 can also be provided within the secondary output 117 similar to the justification 118 provided in the secondary output 116. In addition, the secondary output 117 may also include a prediction distribution 121. The prediction distribution 121 is a result of quantifying the specific selection of sparse Gaussian data points for the embedding space in the last layer 106 to ensure maximal SWAP gain using, for example, a Bayesian uncertainty quantification, and corresponding posterior likelihood of the operating data.

If a justification 118 for the first layer 104 (layer 1) is found, but no justification 119 for the last layer 106 (layer k), the output 108 would be set to null. The justification (e.g., justification 118, justification 119) is to be present for each of the one or more layers 110 to have the output 108 be set to a non-null value.

In an embodiment, if, for example, no justification 118 is found, the computer system 103 generates and sends an alert 150 to a user of the system 100 to indicate that no justification 118 is found. In this case, the alert 150 can take the form of, for example, a flashing red light, displayed letters "NO-GO" on a display of the computer system 103, an alarm sound, etc. On the other hand, if the justification 118 is found, the computer system 103 generates and sends the alert 150 to the user of the system 100 to indicate that a justification is found. In this case, the alert 150 can take the form of, for example, a flashing green light, displayed letters "GO" on the display of the computer system 103, another alarm sound, etc. This alert may include historical data points within a distance of the operating data point. This alert may also include representative data points within a distance of the operating data point as existing in a hypothetical support set adjudging justified belief. The user may then take an action 152 (appropriate or predetermined action) depending on the alert 150.

For example, for a military application, the system 100 may be used for the confirmation of a positive identification of a target. If, upon receiving the alert 150 indicating that justification 118 is found, the user may take an action 152 by activating a trigger to arm a system for a remote munition delivery or other attributable/expendable effect. If, on the other hand, upon receiving an alert 150 indicating that justification 118 is not found, the user may take the action 152 to abort and not to activate the trigger to arm the system for the remote munition delivery. The system 100 can also be mounted to unmanned aircraft systems (UAS) that make use of the machine learning algorithm to detect targets of interest, upon which the alert 150 is sent to the user (a remote operator) who can take an action 152 (an appropriate or a predetermined action).

In another embodiment, the alert 150 is not sent to the user for taking the action 152, instead, the alert 150 is directly sent to an electronic controller 154 that would take the action 152 without intervention from the user. The electronic controller 154 can be, for example, provided on unmanned aircraft systems (UAS). In this case, the UAS can be said to be autonomous.

In the embedding space 112, portions of the space are represented with inducing data points 130 of the training data set 132 (e.g., a Class-1 training sample, a Class-2 training sample). In this way, each new inference or new operating data point 134 (test sample or input 102) is compared against the inducing data points 130 to determine whether the training data set 132 provides sufficient support or not, i.e., justification 118, and to estimate uncertainty and to provide a prediction distribution 120. A cardinality of the inducing data points 130 in the embedding space 112 is generally at least an order of magnitude less than a cardinality of the training data set 132. For example, the inducing data points 130 represent the training data set 132 with some Gaussian representation. Therefore, the inducing data points 130 essentially represent local density regions within the training data set 132. For example, as shown in FIG. 1, each cluster in the training data set 132 can be represented by one or more inducing data points 130. Each cluster of the training data set 132 can be represented by a distribution such as a Gaussian distribution of sparse Gaussian process-determined data points where the inducing data points 130 can be characterized as being the centroids of Gaussian distributions, for example.

Machine learning algorithms that can be safety-controlled in this way using the embedding space 112 include neural networks (where embedding can be determined for each layer of the network), decision trees/forests (where embedding can be determined for each depth of the tree), and monolithic models (where embedding can be determined for just the input space).

In embodiments of the present disclosure, the embedding space 112 can be generated using a sparse Gaussian process, using Gaussian mixture models, or using a random decimation of the training set. In the sparse Gaussian process, a tunable control is the number of inducing data points. In Gaussian mixture models, a tunable control is the number of mixture components. Each component produces an inducing data point that is its centroid. In random decimation of the training data set, each inducing data point is a randomly selected data point exemplar, and a tunable control is the number of random selections performed. Each of these methods shows significant improvement in size, weight, and power (SWAP), measured by the required number of historic data points stored to retrievable memory, the number of comparisons between the inference point and a historic data point, and the total time required to complete all such comparisons, while maintaining epistemic performance against the current state-of-the-art baseline. In contrast, conventional black-box neural networks machine learning algorithms lack any testing procedure for performance control.

The determination to use an embedding-based approach is novel, as is the specific selection of sparse Gaussian data points for embedding to ensure maximal SWAP gain while retaining the ability to do Bayesian uncertainty quantification, for example. The example of Gaussian process and Gaussian distributions is discussed herein throughout as used in the embedding space 112. However, the embedding space 112 is not limited to a Gaussian construction only and can encompass various methods using other functions such as a Lorentzian, or other distribution functions, or to determine a mixture model of Gaussian or non-Gaussian distribution functions via alternate approximation methodology. The present method and system can also use a random selection of points. Any representation or model that captures the density distribution of the training data set 132 can be used to generate the embedding space 112. Therefore, given a training data set 132, one or more density centroids corresponding to the inducing data points 130 within the training data set 132 can be selected and represented by any function, Gaussian, Lorentzian, or other distribution. The plurality of centroids can then be used as representative points of the training data set 132 and use the centroid points corresponding to the inducing data points 130 instead of the training data set 132. Rather than comparing a new operating data point 134 against every example data point in the training data set 132, the new operating data point 134 is only compared against the inducing data points 130 (e.g., centroid points) that are stored. The inducing data points 130 are representative of the training data set 132, and they have stored with them local density information that can be used.

By learning an embedding space 112 in the form of a set of inducing data points 130 (e.g., Gaussian centroid weighted selected data points), the inventor was able to represent the training data set 132 with relevant epistemic features (for the determination of sufficiency of support). If representative associated historical data points are desired, those can also be stored while still significantly SWAP-reduced, including a representation of the inducing points, a number of additional historic data points from the training set which correspond to that inducing point, and local distribution statistics of the training set around the inducing point. In other words, the inducing data points 130 may provide a sufficient set of statistics to characterize the training data set 132 as whole. Therefore, the new operating data point 134 is compared to the inducing data points 130 in order to determine if they are close to a plurality of historical data points within the training data set which provide a sufficient support set for justified belief to be adjudged.

A covariance 140 (e.g., a covariance matrix) of the inducing data points 130 can also be estimated to efficiently estimate the uncertainty of each of the inducing data points 130 when considering the application of the inducing data points 130 in support-based reasoning.

A comparison of each new operating data point 134 against the inducing data points in the embedding space 112 allows for a determination of whether the model would need to extrapolate to respond to the new operating data point 134, whether the inducing data points correspond to a region of low sample density, and/or whether the inducing data points correspond to a region of output uncertainty.

Conventional methods perform an exhaustive comparison of each new operating data point to all training data set 132. In contrast, the present disclosure embeds selected training data points into a density-based summarization by way of inducing data points 130 (e.g., Gaussian-based weighting). In this way, fewer comparisons may be needed as the comparison is made against the number of inducing data points 130, instead of against the total number of training data set 132. The total number of training data set 132 is generally at least one order of magnitude greater than a total number of inducing data points 130.

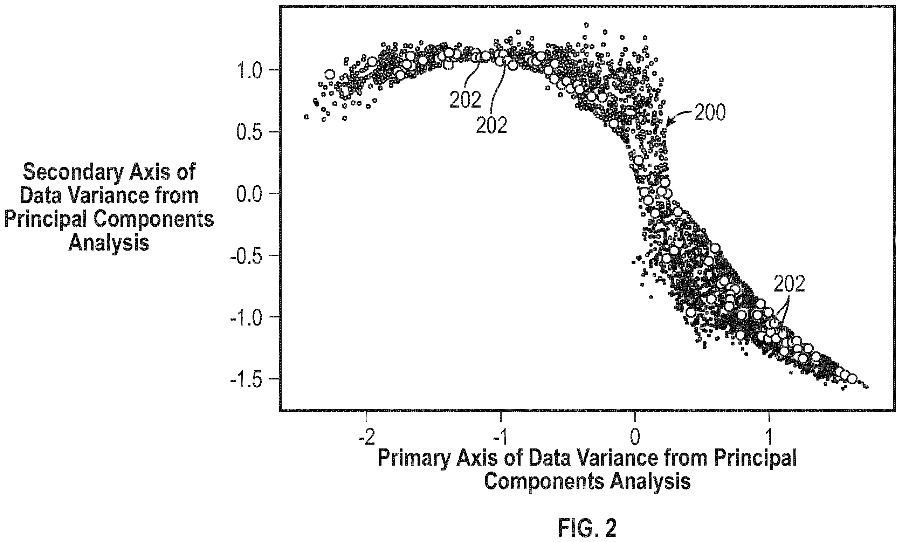

FIG. 2 shows a plot of inducing data points from a training data set, according to an embodiment of the present disclosure, where the vertical axis and the horizontal axis indicate maximum information from a principal components analysis are used to plot historic data points. The horizontal axis corresponds to "Primary axis of data variance from Principal Components Analysis." The vertical axis corresponds to "Secondary axis of data variance from Principal Components Analysis." Points representing the training data set 200 are distributed throughout the plot and form a "cloud" of points. In the example shown, the number of data points in the training data set 200 is about 6700. The training data set 200 is distilled into inducing data points 202. In the example shown, the number of induced points is about one hundred. The inducing data points 202 are representatives of clusters of data points in the training data set 200. Instead of storing the training data set 200 that is relatively large (6700 data points), the relatively smaller set of the inducing data points 202 is stored while retaining prediction accuracy.

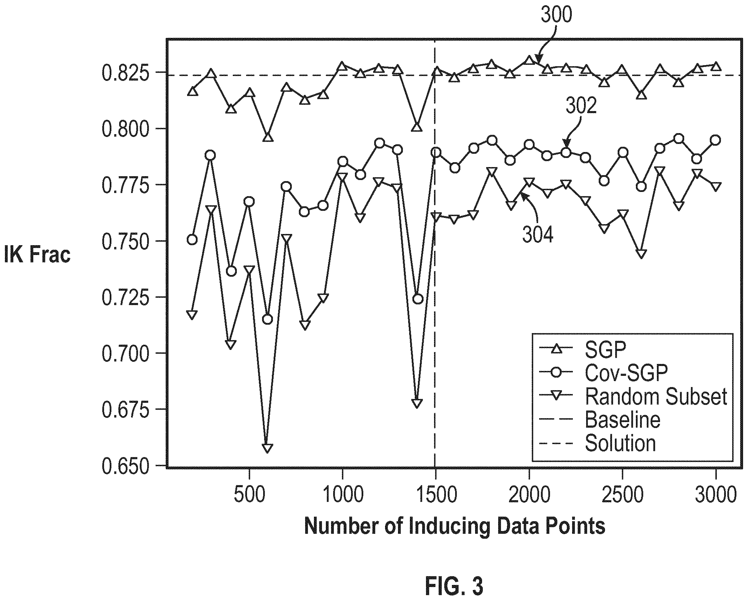

FIG. 3 is a plot of a fraction of trust (i.e., "I know" or IK) data points adjudged to have justifying belief versus the number of inducing data points, according to an embodiment of the present disclosure. The plotted points in FIG. 3 are obtained from an evaluation that is performed against open-source benchmarks including COCO (Common Objects in COntext) and CIFAR-10 data set. The CIFAR-10 data set consists of sixty thousand 32x32 color images in ten classes and is commonly used to train machine learning and computer vision algorithms. The present method and system represented by the points and line 300 (labelled "SGP") corresponds to a system using a sparse Gaussian processing (SGP) for embedding and the points and line 302 (labelled "Cov-SGP") corresponds to a system using a sparse Gaussian process penalized by inducing points with high covariance, with the figure showing accuracy consistently at least as good as a naive (non-epistemic) random points or line 304. The horizontal dotted line represents the "baseline" performance of an epistemic system comparing all new operating data points to all historic data points and the vertical dotted line represents a "solution" where a low number of inducing points is selected for an implementation of a low-SWAP deployment of the system.

The present method and system provide a reduction in SWAP required for visual tasks of approximately 90% while retaining high performance. The present method and system enable immediate use of industry-dominant black box pre-trained models in edge deployment (previously infeasible due to storage and compute requirements).

For example, the present method provides for low-SWAP trusted deployment of neural networks and other effective models that are pre-trained and/or packaged for use without providing the full training set, hyperparameters, or other details of their creation. Even in cases when that information is available, its storage on the edge device may not be required, allowing for a significantly reduced computational footprint for trusted execution. As a result, high-performing models can be deployed with assurances of safe performance even in very limited computational environments. This can allow for expedient trusted autonomy applications in multi-party settings for commercial and military offerings.

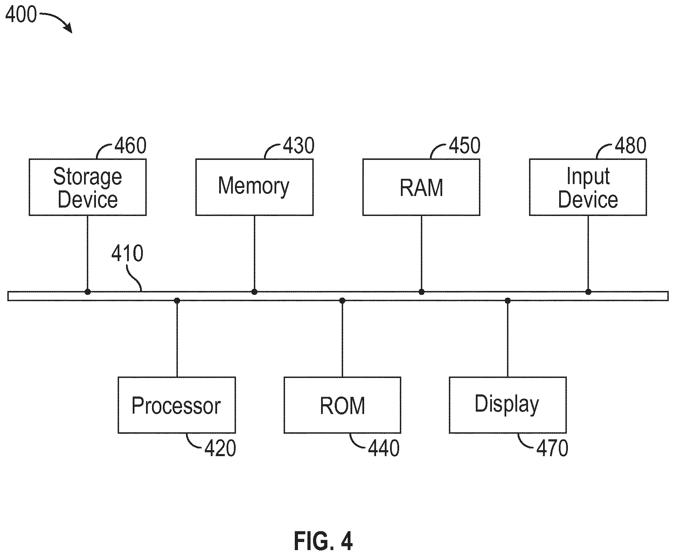

FIG. 4 is diagram of a computer system for implementing the system and the method of generating an embedding space from a training data set for a machine learning algorithm, according to an embodiment of the present disclosure. With reference to FIG. 4, the computer system 103 includes a computing device 400, including a processing unit (e.g., a CPU or a processor) 420 and a system bus 410 that couples various system components including the system memory 430 such as a read-only memory (ROM) 440 and a random-access memory (RAM) 450 to the processor 420. The computing device 400 can include a cache of high-speed memory connected directly with, in close proximity to, or integrated as part of the processor 420. The computing device 400 copies data from the system memory 430 and/or the storage device 460 to the cache for quick access by the processor 420. In this way, the cache provides a performance boost that avoids processor 420 delays while waiting for data. These and other modules can control or be configured to control the processor 420 to perform various actions. Other system memory 430 may be available for use as well. The system memory 430 can include multiple different types of memory with different performance characteristics. The disclosure may operate on the computing device 400 with more than one processor 420 (e.g., multi-core processors) or on a group or a cluster of computing devices networked together in a distributed computing environment to provide greater processing capability. The processor 420 can include any general-purpose processor and a hardware module or a software module as well as a special-purpose processor where software instructions are incorporated into the actual processor design. The processor 420 may essentially be a completely self-contained computing system, containing multiple cores or processors, a bus, a memory controller, a cache, etc. A multi-core processor may be symmetric or asymmetric.

The system bus 410 may be any of several types of bus structures including a memory bus or a memory controller, a peripheral bus, and a local bus using any of a variety of bus architectures. A basic input/output (BIOS) stored in memory ROM 440, or the like, may provide the basic routine that helps to transfer information between elements within the computing device 400, such as during start-up. The computing device 400 further includes storage devices 460 such as a hard disk drive, a magnetic disk drive, an optical disk drive, tape drive, or the like. Other hardware or software modules are contemplated. The storage device 460 is connected to the system bus 410 by a drive interface. The drives and the associated computer-readable storage media provide nonvolatile storage of computer-readable instructions, data structures, program modules and other data for the computing device 400. In one aspect, a hardware module that performs a particular function includes the software component stored in a tangible computer-readable storage medium in connection with the necessary hardware components, such as the processor 420, the system bus 410, the output device 470 (e.g., display), and so forth, to carry out the function. In another aspect, the system can use a processor and a computer-readable storage medium to store instructions that, when executed by the processor, cause the processor to perform a method or other specific actions. The basic components and appropriate variations are contemplated depending on the type of device, such as whether the computing device 400 is a small, handheld computing device, a desktop computer, or a computer server.

The storage device 460 can be a hard disk or other computer-readable media that can store data accessible by a computer, such as magnetic cassettes, flash memory cards, digital versatile disks, cartridges, etc. Tangible computer-readable storage media, computer-readable storage devices, or computer-readable memory devices, expressly exclude media such as transitory waves, energy, carrier signals, electromagnetic waves, and signals, per se.

To enable user interaction with the computing device 400, an input device 480 represents any number of input mechanisms, such as a microphone for speech, a touch-sensitive screen for gesture or a graphical input, a keyboard, a mouse, motion input, speech and so forth. An output device 470 can be a display or one or more of a number of output mechanisms known to those of skill in the art. In some instances, multimodal systems enable a user to provide multiple types of input to communicate with the computing device 400. There is no restriction on operating on any particular hardware arrangement and, therefore, the basic features here may easily be substituted for improved hardware or firmware arrangements as they are developed.

Further aspects are provided by the subject matter of the following clauses.

A method of generating an embedding space from a training data set for a machine learning algorithm implemented on a computer system having one or more processors includes receiving, through an input of a computer system having one or more processors, an input operating data point by one or more layers of a machine learning algorithm, executing, on the computer system, the machine learning algorithm, generating an embedding space, by the one or more layer of the machine learning algorithm executing on the computer system, using a training data set, wherein the embedding space includes a plurality of inducing data points, each inducing data point corresponding to a cluster of training data points in the plurality of training data points, a number of the plurality of inducing data points being less than a number of a plurality of training data points in the training data set, comparing, by the machine learning algorithm executing on the computer system, the input operating data point against the plurality of inducing data points, determining, by the machine learning algorithm executing on the computer system, whether there is justified belief for the operating data point by determining whether there exists a sufficient set of supporting historical data points in the plurality of training data points within a fixed parametrizable distance from the input operating data point, generating, by the machine learning algorithm executing on the computer system, an alert based on the determining of the justification, to enable a user or an electronic controller to take an appropriate action, and outputting the alert.

The method of the preceding clause, wherein generating the embedding space by the machine learning algorithm includes generating the embedding space using one or more layers of the machine learning algorithm, each layer of the one or more layers providing a transformation from an input space to an output space, a cardinality of the input space being equal to the cardinality of an output space of a preceding layer.

The method of any preceding clause, wherein the machine learning algorithm includes a neural network, a decision tree, or a monolithic model.

The method of the preceding clause, wherein, in the neural network, generating the embedding space is performed in one or more layers of the neural network.

The method of any preceding clause, wherein, in the decision tree, generating the embedding space is performed at each depth of the decision tree.

The method of any preceding clause, wherein, in the monolithic model, generating the embedding space is performed for an input space.

The method of any preceding clause, wherein generating the embedding space includes generating the plurality of inducing data points, each inducing data point in the plurality of inducing data points corresponding to a centroid of a density distribution capturing a density distribution of the plurality of training data points to provide a plurality of centroids that are representative points of the plurality of training data points of the training data set.

The method of any preceding clause, wherein generating the embedding space includes generating the plurality of inducing data points, each cluster of the plurality of training data points being represented by a Gaussian distribution, each of the plurality of inducing data points corresponding to a centroid of the Gaussian distribution.

The method of any preceding clause, further including generating, by a sensor device, the input operating data point received through the input of the computer system.

The method of any preceding clause, wherein the input operating data point includes remote sensing data.

A system of generating an embedding space from a training data set for a machine learning algorithm implemented on a computer system having one or more processors, the system including an input to receive an input operating data point by one or more layers of a machine learning algorithm implemented on the computer system. The computer system being configured (a) execute the machine learning algorithm, (b) to generate an embedding space by the one or more layer of the machine learning algorithm executing on the computer system using a training data set, wherein the embedding space includes a plurality of inducing data points, each inducing data point corresponding to a cluster of training data points in the plurality of training data points, a number of the plurality of inducing data points is less than a number of a plurality of training data points in the training data set, (c) to compare, by the machine learning algorithm executing on the computer system, the input operating data point against the plurality of inducing data points, (d) to determine, by the machine learning algorithm executing on the computer system, whether is justified believe for the operating data point by determining whether there exists a sufficient set of supporting historical data points in the plurality of training data points within a fixed distance from the input operating data point, (e) to generate, by the machine learning algorithm executing on the computer system, an alert based on the determining of the justification to enable a user or an electronic controller to take an appropriate action and (f) to output the alert.

The system of the preceding clause, wherein the computer system is configured to generate the embedding space using the one or more layers of the machine learning algorithm, each layer of the one or more layers providing a transformation from an input space to an output space, a cardinality of the input space being equal to the cardinality of an output space of a preceding layer.

The system of any preceding clause, wherein the machine learning algorithm includes a neural network, a decision tree, or a monolithic model.

The system of the preceding clause, wherein, in the neural network, generating the embedding space is performed in one or more layers of the neural network.

The system of any preceding clause, wherein, in the decision tree, generating the embedding space is performed at each depth of the decision tree.

The system of any preceding clause, wherein, in the monolithic model, generating the embedding space is performed for an input space.

The system of any preceding clause, wherein the computer system is configured to generate the plurality of inducing data points, each inducing data point in the plurality of inducing data points corresponds to a centroid of a density distribution capturing a density distribution of the plurality of training data points to provide a plurality of centroids that are representative points of the plurality of training data points of the training data set.

The system of any preceding clause, wherein the computer system is configured to generate the plurality of inducing data points, each cluster of the plurality of training data points being represented by a Gaussian distribution wherein each of the plurality of inducing data points correspond to a centroid of the Gaussian distribution.

The system of any preceding clause, further including a sensor device in communication with the computer system, wherein the sensor device generates input operating data received through the input of the computer system.

A non-transitory computer-readable medium storing instructions that, when executed by a computer system having one or more processors, cause the computer system (a) to receive an input operating data point by one or more layers of a machine learning algorithm implemented on the computer system, (b) to execute the machine learning algorithm, (c) to generate an embedding space using a training data set, wherein the embedding space includes a plurality of inducing data points, each inducing data point corresponding to a cluster of training data points in the plurality of training data points, a number of the plurality of inducing data points is less than a number of a plurality of training data points in the training data set, (d) to compare, by the machine learning algorithm executing on the computer system. The input operating data point against the plurality of inducing data points, (e) determine whether there is justified belief for the operating data point by determining whether there exists a sufficient set of supporting historical data points in the plurality of training data points within a fixed distance from the input operating data point, (f) to generate an alert based on determining whether the justification exists to enable a user or an electronic controller to take an appropriate action; and (g) to output the alert.

A method of generating an embedding space from a training data set for a machine learning algorithm implemented on a computer system having one or more processors, the method comprising: receiving, through an input of the computer system, an input operating data point by one or more layers of the machine learning algorithm; executing, on the computer system, the machine learning algorithm; generating an embedding space, by the one or more layers of the machine learning algorithm executing on the computer system, using a training data set, wherein the embedding space comprises a plurality of inducing data points, each inducing data point corresponding to a cluster of training data points in the plurality of training data points, a number of the plurality of inducing data points being less than a number of a plurality of training data points in the training data set; comparing, by the machine learning algorithm executing on the computer system, the input operating data point against the plurality of inducing data points; determining, by the machine learning algorithm executing on the computer system, whether there is justified belief in the operating data point by determining whether there exists a sufficient set of supporting historical data points in the plurality of training data points within a fixed distance from the input operating data point; generating, by the machine learning algorithm executing on the computer system, an alert based on the determining whether there is justified belief to enable a user or an electronic controller to take an appropriate action; and outputting, by the computer system, the alert.

The method of any preceding clause, wherein generating the embedding space by the machine learning algorithm comprises generating the embedding space using one or more layers of the machine learning algorithm, each layer of the one or more layers providing a transformation from an input space to an output space, wherein a cardinality of the input space is equal to the cardinality of an output space of a preceding layer.

The method of any preceding clause, wherein generating the embedding space comprises generating the plurality of inducing data points, each inducing data point in the plurality of inducing data points corresponding to a centroid of a density distribution capturing a density distribution of the plurality of training data points to provide a plurality of centroids that are representative points of the plurality of training data points of the training data set.

The method of any preceding clause, wherein generating the embedding space comprises generating the plurality of inducing data points, each cluster of the plurality of training data points being represented by a Gaussian distribution, each of the plurality of inducing data points corresponding to a centroid of the Gaussian distribution.

The method of any preceding clause, further comprising generating, by a sensor device, the input operating data received through the input of the computer system.

The method of any preceding clause, wherein the input operating data comprises remote sensing data.

The method of any preceding clause, wherein the machine learning algorithm comprises a neural network, a decision tree, or a monolithic model.

The method of any preceding clause, wherein, in the neural network, generating the embedding space is performed in one or more layers of the neural network.

The method of any preceding clause, wherein, in the decision tree, generating the embedding space is performed at each depth of the decision tree.

The method of any preceding clause, wherein, in the monolithic model, generating the embedding space is performed for an input space.

A system for generating an embedding space from a training data set for a machine learning algorithm implemented on a computer system having one or more processors, the system comprising: an input to receive an input operating data point by one or more layers of the machine learning algorithm; the computer system being configured: to execute the machine learning algorithm; to generate an embedding space by the one or more layer of the machine learning algorithm executing on the computer system using a training data set, wherein the embedding space comprises a plurality of inducing data points, each inducing data point corresponding to a cluster of training data points in the plurality of training data points, a number of the plurality of inducing data points being less than a number of a plurality of training data points in the training data set; to compare, by the machine learning algorithm executing on the computer system, the input operating data point against the plurality of inducing data points; to determine, by the machine learning algorithm executing on the computer system, whether there is justified belief for the operating data point by determining whether there exists a sufficient set of supporting historical data points in the plurality of training data points within a fixed distance from the input operating data point; to generate, by the machine learning algorithm executing on the computer system, an alert based on the determining whether there is justified belief to enable a user or an electronic controller to take an appropriate action; and to output the alert.

The system of any preceding clause, wherein the computer system is configured to generate the embedding space using the one or more layers of the machine learning algorithm, each layer of the one or more layers providing a transformation from an input space to an output space, wherein a cardinality of the input space is equal to the cardinality of an output space of a preceding layer.

The system of any preceding clause, wherein the computer system is configured to generate the plurality of inducing data points, each inducing data point in the plurality of inducing data points corresponding to a centroid of a density distribution capturing a density distribution of the plurality of training data points to provide a plurality of centroids that are representative points of the plurality of training data points of the training data set.

The system of any preceding clause, wherein the computer system is configured to generate the plurality of inducing data points, each cluster of the plurality of training data points being represented by a Gaussian distribution, each of the plurality of inducing data points corresponding to a centroid of the Gaussian distribution.

The system of any preceding clause, further comprising a sensor device in communication with the computer system, wherein the sensor device generates the input operating data point received through the input of the computer system.

The system of any preceding clause, wherein the machine learning algorithm comprises a neural network, a decision tree, or a monolithic model.

The system of any preceding clause, wherein, in the neural network, generating the embedding space is performed in one or more layers of the neural network.

The system of any preceding clause, wherein, in the decision tree, generating the embedding space is performed at each depth of the decision tree.

The system of any preceding clause, wherein, in the monolithic model, generating the embedding space is performed for an input space.

A non-transitory computer-readable medium storing instructions that, when executed by a computer system having one or more processors, cause the computer system: to receive an input operating data point by one or more layers of a machine learning algorithm implemented on the computer system; to execute the machine learning algorithm; to generate an embedding space using a training data set, wherein the embedding space comprises a plurality of inducing data points, each inducing data point corresponding to a cluster of training data points in the plurality of training data points, a number of the plurality of inducing data points being less than a number of a plurality of training data points in the training data set; to compare, by the machine learning algorithm executing on the computer system, the input operating data point against the plurality of inducing data points; to determine whether there is justified belief or no justified belief for the operating data point by determining whether there exists a sufficient set of supporting historical data points in the plurality of training data points within a fixed distance from the input operating data point; to generate an alert based on the determining whether there is justified belief to enable a user or an electronic controller to take an appropriate action; and to output the alert.

Although the foregoing description is directed to the preferred embodiments of the present disclosure, other variations and modifications will be apparent to those skilled in the art and may be made without departing from the spirit or the scope of the disclosure. Moreover, features described in connection with one embodiment of the present disclosure may be used in conjunction with other embodiments, even if not explicitly stated above.

## Claims

1. A method of generating an embedding space from a training data set for a machine learning algorithm implemented on a computer system having one or more processors, the method comprising:
receiving, through an input (102) of the computer system (103), an input operating data point (134) by one or more layers of the machine learning algorithm;
executing, on the computer system (103), the machine learning algorithm;
generating an embedding space (112, 114), by the one or more layers of the machine learning algorithm executing on the computer system, using a training data set (132) comprising a plurality of training data points, wherein the embedding space comprises a plurality of inducing data points (130, 202), each inducing data point corresponding to a cluster of training data points in the plurality of training data points, a number of the plurality of inducing data points being less than a number of a plurality of training data points in the training data set;
comparing, by the machine learning algorithm executing on the computer system (103), the input operating data point (134) against the plurality of inducing data points;
determining, by the machine learning algorithm executing on the computer system (103), whether there is justified belief in the operating data point (134) by determining whether there exists a sufficient set of supporting historical data points in the plurality of training data points within a fixed distance from the input operating data point;
generating, by the machine learning algorithm executing on the computer system (103), an alert (150) based on the determining whether there is justified belief to enable a user or an electronic controller to take an appropriate action (152); and
outputting, by the computer system, the alert (150).

2. The method of claim 1, wherein generating the embedding space by the machine learning algorithm comprises generating the embedding space using one or more layers (110) of the machine learning algorithm, each layer (104,106) of the one or more layers (110) providing a transformation from an input space to an output space, wherein a cardinality of the input space is equal to the cardinality of an output space of a preceding layer (104).

3. The method of any preceding claim, wherein generating the embedding space comprises generating the plurality of inducing data points (130, 202), each inducing data point in the plurality of inducing data points (130, 202) corresponding to a centroid of a density distribution capturing a density distribution of the plurality of training data points to provide a plurality of centroids that are representative points of the plurality of training data points of the training data set (132).

4. The method of any preceding claim, wherein generating the embedding space comprises generating the plurality of inducing data points (130, 202), each cluster of the plurality of training data points being represented by a Gaussian distribution, each of the plurality of inducing data points (130, 202) corresponding to a centroid of the Gaussian distribution.

5. The method of any preceding claim, further comprising generating, by a sensor device (101), the input operating data received through the input (102) of the computer system (103).

6. The method of any preceding claim, wherein the input operating data comprises remote sensing data.

7. The method of any preceding claim, wherein the machine learning algorithm comprises a neural network, a decision tree, or a monolithic model, and optionally, in the neural network, generating the embedding space is performed in one or more layers of the neural network, and optionally, in the decision tree, generating the embedding space is performed at each depth of the decision tree, and optionally, in the monolithic model, generating the embedding space is performed for an input space.

8. A system (100) for generating an embedding space from a training data set (132, 200) for a machine learning algorithm implemented on a computer system having one or more processors, the system comprising:
an input (102) to receive an input operating data point (134) by one or more layers of the machine learning algorithm;
the computer system being configured:
to execute the machine learning algorithm;
to generate an embedding space (112, 114) by the one or more layer of the machine learning algorithm executing on the computer system using a training data set (132), wherein the embedding space comprises a plurality of inducing data points (130, 202), each inducing data point corresponding to a cluster of training data points in the plurality of training data points, a number of the plurality of inducing data points being less than a number of a plurality of training data points in the training data set;
to compare, by the machine learning algorithm executing on the computer system (103), the input operating data point (134) against the plurality of inducing data points;
to determine, by the machine learning algorithm executing on the computer system, whether there is justified belief for the operating data point (134) by determining whether there exists a sufficient set of supporting historical data points in the plurality of training data points within a fixed distance from the input operating data point;
to generate, by the machine learning algorithm executing on the computer system (103), an alert (150) based on the determining whether there is justified belief to enable a user or an electronic controller to take an appropriate action (152); and
to output the alert (150).

9. The system of claim 8, wherein the computer system is configured to generate the embedding space using the one or more layers of the machine learning algorithm, each layer of the one or more layers providing a transformation from an input space to an output space, wherein a cardinality of the input space is equal to the cardinality of an output space of a preceding layer.

10. The system of claim 8 or 9, wherein the computer system is configured to generate the plurality of inducing data points, each inducing data point in the plurality of inducing data points corresponding to a centroid of a density distribution capturing a density distribution of the plurality of training data points to provide a plurality of centroids that are representative points of the plurality of training data points of the training data set.

11. The system of any of claims 8 to 10, wherein the computer system is configured to generate the plurality of inducing data points, each cluster of the plurality of training data points being represented by a Gaussian distribution, each of the plurality of inducing data points corresponding to a centroid of the Gaussian distribution.

12. The system of any of claims 8 to 11, further comprising a sensor device in communication with the computer system, wherein the sensor device generates the input operating data point received through the input of the computer system.

13. The system of any of claims 8 to 12, wherein the machine learning algorithm comprises a neural network, a decision tree, or a monolithic model, and optionally, in the neural network, generating the embedding space is performed in one or more layers of the neural network, and optionally, in the decision tree, generating the embedding space is performed at each depth of the decision tree, and optionally, in the monolithic model, generating the embedding space is performed for an input space.

14. A non-transitory computer-readable medium storing instructions that, when executed by a computer system having one or more processors, cause the computer system:
to receive an input operating data point (134) by one or more layers of a machine learning algorithm implemented on the computer system;
to execute the machine learning algorithm;
to generate an embedding space (112, 114) using a training data set (132), wherein the embedding space comprises a plurality of inducing data points (130, 202), each inducing data point corresponding to a cluster of training data points in the plurality of training data points, a number of the plurality of inducing data points being less than a number of a plurality of training data points in the training data set;
to compare, by the machine learning algorithm executing on the computer system, the input operating data point (134) against the plurality of inducing data points;
to determine whether there is justified belief or no justified belief for the operating data point (134) by determining whether there exists a sufficient set of supporting historical data points in the plurality of training data points within a fixed distance from the input operating data point;
to generate an alert (150) based on the determining whether there is justified belief to enable a user or an electronic controller to take an appropriate action (152); and
to output the alert (150).
